# EUROPÄISCHE PATENTANMELDUNG

(11) **EP 3 922 540 A1**
(43) Veröffentlichungstag der Anmeldung: **15.12.2021**
(21) Anmeldenummer: 20211011.0
(22) Anmeldetag: 01.12.2020
(51) Int. Cl.: B62J 6/12, B60B 27/02, H02K 1/06

(54) **NABENGENERATOR**

(30) Priorität: 10.06.2020 CN 202021064556 U; 17.07.2020 CN 202021421103 U
(71) Anmelder: Jiashan Shengguang Electronics Co., Ltd., Jiashan City, Zhejiang (CN)
(72) Erfinder: Guohua, Gao, Zhejiang (CN)
(74) Vertreter: Paul & Albrecht Patentanwälte PartG mbB

(57) **Zusammenfassung**

Die vorliegende Erfindung betrifft einen Nabengenerator (1) für Fahrräder, umfassend eine Achse (10), eine Spulenwicklungsanordnung (20), die auf der Achse (10) befestigt ist, eine Gehäuseanordnung, die auf die Spulenwicklungsanordnung (20) aufgeschoben ist, und eine zylindrische Permanentmagnetanordnung (40), die fest an der Gehäuseanordnung angeordnet und zwischen der Gehäuseanordnung und der Spulenwicklungsanordnung (20) gehalten ist.

## Beschreibung

### Technischer Bereich

Die vorliegende Erfindung betrifft den technischen Bereich von Generatoren, insbesondere Nabengeneratoren für Fahrräder.

### Stand der Technik

In der heutigen Zeit sind Fahrräder ein unverzichtbares Fortbewegungsmittel zum Pendeln oder für Ausflüge. Seit einiger Zeit sind Fahrräder aufgrund zunehmender Popularität von Familienkraftfahrzeugen jedoch nicht länger die beliebtesten Fortbewegungsmittel. In den letzten Jahren wurde zur CO2-Einsparung und aus gesundheitlichen Gründen wieder häufiger auf das Fahrradfahren zurückgegriffen. Heutzutage gibt es viele Arten von Fahrrädern, beispielsweise Mountainbikes, Geländefahrräder, etc., die jeweils ihre eigenen Funktionen aufweisen.

Fahrräder benötigen häufig eine Stromversorgung, um Fahrradschlösser, Fahrradleuchten und Signalmodule mit der nötigen Energie zu versorgen. Einige gemeinschaftlich genutzte Fahrräder werden mit Solarpanelen betrieben. Bei Haushaltsfahrrädern oder in Fällen, in denen Solarenergie nicht verwendet werden kann, wie beispielsweise an sehr regenreichen Tagen, führt fehlende Energie zu Problemen.

Als Lösung wurde ein Nabengenerator entwickelt. Bereits existierende Nabengeneratoren sind aufgrund der großen Anzahl von Bauteilen jedoch nicht hinreichend kompakt und weisen ein großes Volumen auf, insbesondere bezogen auf die axiale Länge, was offensichtlich der Montage und dem strukturellen Design von Fahrrädern nicht zuträglich ist.

### Zusammenfassung der Erfindung

In diesem Zusammenhang schafft die vorliegende Erfindung einen Nabengenerator für Fahrräder mit kompakter Struktur, durch den die zuvor genannten technischen Probleme behoben werden.

Der erfindungsgemäße Nabengenerator für Fahrräder umfasst eine Achse, eine Spulenwicklungsanordnung, die auf der Achse befestigt ist, eine Gehäuseanordnung, die auf die Spulenwicklungsanordnung aufgeschoben ist, und eine zylindrische Permanentmagnetanordnung, die fest an der Gehäuseanordnung angeordnet und zwischen der Gehäuseanordnung und der Spulenwicklungsanordnung gehalten ist, wobei die Spulenwicklungsanordnung eine auf die Achse geschobene Wicklung, eine linke Abdeckhülse und eine rechte Abdeckhülse, die an beiden Seiten der Wicklung fixiert sind, und eine Klemmscheibe aufweist, die an der linken Abdeckhülse angeordnet ist, wobei auf der Klemmscheibe eine Mehrzahl von vorstehenden Punkten vorgesehen ist, die in die Wicklung gedrückt sind, wobei die Gehäuseanordnung eine Hülse, eine Abdeckzylinderanordnung, die an einem Ende der Hülse angeordnet ist und zwei Lager aufweist, die an der Hülse und der Abdeckzylinderanordnung angeordnet sind, wobei die Abdeckzylinderanordnung über ein Gewinde mit der Hülse verschraubt ist, und wobei die zylindrische Permanentmagnetanordnung einen Montagezylinder, der an der Innenseitenwand der Hülse befestigt ist, und einen Permanentmagneten aufweist, der in dem Montagezylinder angeordnet ist, wobei der Permanentmagnet, wenn die Hülse dreht, drehend um die Wicklung angetrieben wird, um elektrischen Strom zu erzeugen.

Bevorzugt sind zwei Flansche an den axialen Enden der Hülse angeordnet, die sich entlang der radialen Richtung der Achse erstrecken.

Vorteilhaft ist eine Seite der Hülse mit einer ersten Lageraufnahmevertiefung versehen, wobei eines der beiden Lager in der ersten Lageraufnahmevertiefung aufgenommen ist und wobei einer der beiden Flansche außerhalb der ersten Aufnahmevertiefung angeordnet ist.

Zwischen der Hülse und der ersten Lageraufnahmevertiefung ist bevorzugt eine Übergangskante vorgesehen.

Gemäß einer Ausgestaltung der vorliegenden Erfindung weist die Abdeckzylinderanordnung einen Abdeckzylinder auf, wobei eine zweite Lageraufnahmevertiefung an einer Seite des Abdeckzylinders vorgesehen ist, und wobei eines der Lager in der zweiten Lageraufnahmevertiefung aufgenommen ist.

Vorteilhaft ist die rechte Abdeckhülse eine gestufte Abdeckhülse mit einer Hülsenstufe, an der dasjenige Lager angeordnet ist, das in der zweiten Lageraufnahmevertiefung aufgenommen ist.

Die zweite Lageraufnahmevertiefung ist vorteilhaft mit einem Sicherungsring zum Festklemmen des Lagers versehen, wobei der Innendurchmesser des Sicherungsrings dem Innendurchmesser des Lagers entspricht.

Bevorzugt umfasst der Fahrradnabengenerator ferner eine auf die Achse aufgeschobene Stromausgabeanordnung, die eine an der Achse befestigte Anschlaghülse umfasst und eine elektrische Steckeranordnung, die an der Anschlaghülse befestigt ist.

Bevorzugt drückt ein Ende der Anschlaghülse gegen den Innenring des Lagers und ist an dem Innenring des Lagers fixiert.

Vorteilhaft sind zumindest zwei Muttern auf der Achse angeordnet, wobei die zwei Muttern dazu verwendet werden, die Relativposition der beiden Lager zu fixieren.

Verglichen mit dem Stand der Technik nimmt der erfindungsgemäße Nabengenerator die Struktur der Gehäuseanordnung, der Spulenwicklungsanordnung und der Permanentmagnetanordnung an. Die Gehäuseanordnung umfasst eine Hülse, eine Abdeckzylinderanordnung sowie zwei Lager. Die beiden Lager sind in der Hülse und in der Abdeckzylinderanordnung aufgenommen, wobei die Hülse mit einem Flansch zur Montage der Speichen, versehen ist, wobei der Flansch und das Lager auf derselben radialen Ebene Positioniert sind, wodurch die axiale Länge der Gehäuseanordnung verkürzt werden kann. Gleichzeitig werden die Anforderungen an die Montagestruktur reduziert, da das Lager in einer Richtung positioniert werden muss. Zudem ist der Abdeckzylinderanordnung mit der Hülse verschraubt, wodurch die Anzahl zu montierender Bauteile verringert wird. Die beiden Seiten der Spulenwicklungsanordnung sind über die linke und rechte Abdeckhülse fixiert, wodurch die Befestigung erleichtert wird. Ferner werden die linke und die rechte Abdeckhülse zusammengedrückt, was nicht nur dazu beiträgt, die Position des Lagers zu fixieren, wodurch die Stabilität der Struktur erhöht wird, sondern auch das Volumen reduziert und eine compaktere Struktur nach sich zieht, da keine zusätzlichen Befestigungselemente erforderlich sind.

Im Ergebnis kann der erfindungsgemäße Fahrradnabengenerator nicht nur einen kompakten Aufbau erzielen und die Stabilität erhöhen, sondern auch die axiale Länge reduzieren, was der Gestaltungsfreiheit bezüglich des Fahrraddesigns dienlich ist.

### Beschreibung der Zeichnungen

Figur 1 ist eine perspektivische Explosionsansicht eines Fahrradnabengenerators gemäß einer Ausführungsform der vorliegenden Erfindung;
Figur 2 ist eine perspektivische Ansicht einer Klemmscheibe des in Figur 1 gezeigten Fahrradnabengenerators und
Figur 3 ist eine Schnittansicht des in Figur 1 dargestellten Fahrradnabengenerators.

### Spezifische Ausführungsformen

Spezifischen Ausführungsformen der vorliegenden Erfindung werden nachfolgend im Detail beschrieben. Es sollte klar sein, dass die Beschreibung der Ausführungsformen den Schutzbereich der vorliegenden Erfindung nicht einschränken soll.

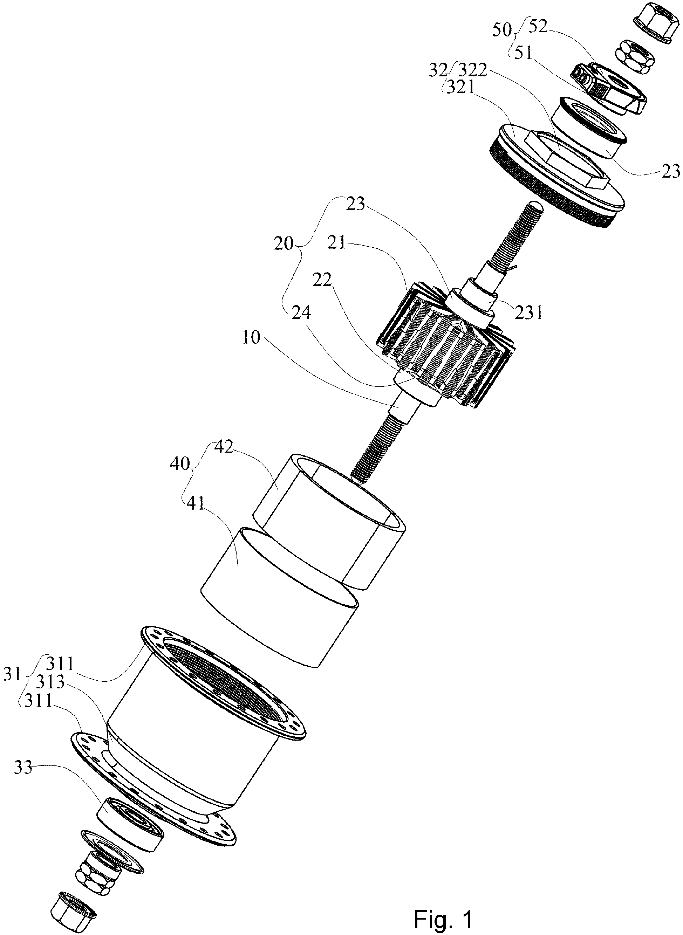

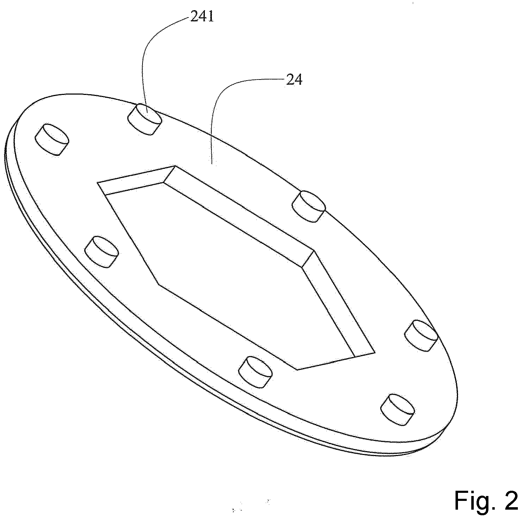

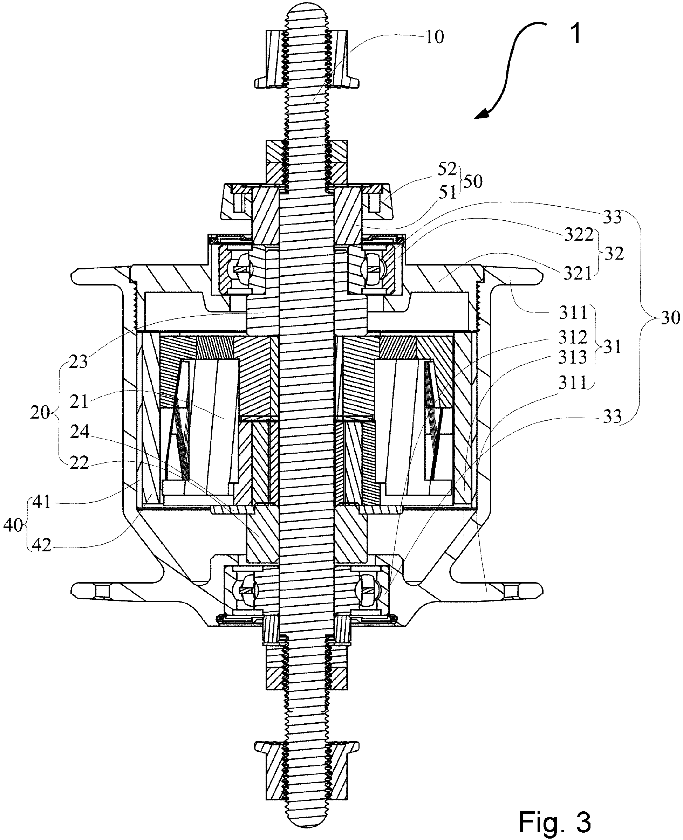

Die Figuren 1 bis 3 zeigen schematische Ansichten des Aufbaus eines Fahrradnabengenerators 1 gemäß einer Ausführungsform der vorliegenden Erfindung. Der Fahrradnabengenerator 1 wird normalerweise für Fahrräder verwendet. Das Fahrrad selbst stellt Stand der Technik dar und umfasst einen Rahmen sowie zwei an dem Rahmen drehbar gehaltene Räder. Das Fahrrad umfasst natürlich weitere funktionale Module, wie beispielsweise Bremsen, einen Sattel, Drehzahlwechselmechanismen, etc., die vorliegend weder beschrieben noch in den Figuren gezeigt werden. Der Fahrradnabengenerator 1 ist an einem Rad installiert. Der Fahrradnabengenerator 1 umfasst eine Achse 10, die fest an dem Fahrrad montiert ist, eine Spulenwicklungsanordnung 20, die fest an der Achse 10 befestigt ist, eine Gehäuseanordnung, die auf die Spulenwicklungsanordnung 20 gestülpt ist, eine zylindrische Permanentmagnetanordnung 40, die fest an der Gehäuseanordnung angeordnet und zwischen der Gehäuseanordnung 30 und der Spulenwicklungsanordnung 20 positioniert ist, und eine Stromausgabeanordnung 50, die auf die Achse 10 geschoben ist. Natürlich umfasst der Fahrradnabengenerator auch weitere funktionale Module, beispielsweise Montagekomponenten, Installationskomponenten, elektrische Verbindungskomponenten, etc., die in der Fachwelt bekannt sind und daher nachfolgend nicht im Einzelnen erläutert werden.

Die Achse 10 ist bekannt und wird zur Anbringung eines Rads verwendet, wobei sich das Rad um die Achse 10 dreht. Die Spulenwicklungsanordnung 20 ist fest an der Achse 10 befestigt, die somit einem Stator entspricht. Die Spulenwicklungsanordnung 20 umfasst eine Wicklung 21, eine linke Abdeckhülse 22 und eine rechte Abdeckhülse 23, die an beiden Seiten der Wicklung 21 angeordnet sind, und eine Klemmscheibe 24, die an der linken Abdeckhülse 22 angeordnet ist. Wie der Stator eines Motors sollte die Wicklung 21 bekannt sein, die eine zylindrische Struktur aufweist, die eine Mehrzahl von Jochen und um die Joche gewickelte Spulen umfasst. Wenn sich der Rotor um die Wicklung 21 dreht, erzeugt die Wicklung 21 elektrischen Strom. Die linke Abdeckhülse 22 ist auf der Achse 10 angeordnet, vorliegend unter Verwendung einer Schraubenverbindung fixiert. Die Klemmscheibe 24 ist zwischen der linken Abdeckhülse 22 und der Wicklung 21 aufgenommen, und eine Vielzahl von vorstehenden Punkten 241, die in der Wicklung 21 eingebettet sind, sind auf der Klemmscheibe 24 angeordnet. Die rechte Abdeckhülse 23 ist eine stufenförmige Abdeckhülse und umfasst eine Hülsenstufe, deren Funktion nachfolgend noch näher erläutert wird.

Die Relativposition zwischen der Wicklung 21 und der Achse 10 kann fixiert werden, indem die beiden Abdeckhülsen 21 und 23 sowie die Klemmscheibe 24 verpresst und positioniert werden. Die Gehäuseanordnung 30 umfasst eine Hülse 31, eine Abdeckzylinderanordnung 32, die an einem Ende der Hülse 31 vorgesehen ist, und zwei Lager 33, die an der Hülse 31 und der Abdeckzylinderanordnung 32 angeordnet sind. Die Hülse 31 umfasst zwei Flansche 311, die an beiden Enden der axialen Richtung vorgesehen sind, und eine erste Lageraufnahmevertiefung 312, die an einer Seite vorgesehen ist, und eine Übergangskante 313, die zwischen der Hülse 31 und der ersten Lageraufnahmevertiefung 312 angeordnet ist. Die Flansche 311 erstrecken sich in radialer Richtung der Achse 10 und dienen auch zur Befestigung von Speichen. Die erste Lageraufnahmevertiefung 312 wird zur Aufnahme eines der beiden Lager 33 verwendet und sie kann einen konvexen Ring aufweisen, der gegen eine Seite des Lagers 33 drückt. Die andere Seite des Innenrings des Lagers 33, das in der ersten Lageraufnahmevertiefung 312 aufgenommen ist, grenzt an die linke Abdeckhülse 22 an, wodurch ein Widerlager erzielt wird. Einer der beiden Flansche 311 ist außerhalb der ersten Lageraufnahmevertiefung 312 positioniert. Die Übergangskante 313 dient dazu, den Flansch 311, die erste Lageraufnahmevertiefung 312 und die Hülse 31 einteilig auszubilden, wodurch die Montage erleichtert und die Stabilität des montierten Produkts verbessert wird. Die Abdeckzylinderanordnung 32 umfasst einen Abdeckzylinder 321 und eine zweite Lageraufnahmevertiefung 322, die an einer Seite des Abdeckzylinders 321 vorgesehen ist. Der Abdeckzylinder 321 ist mit der Hülse 31 verschraubt. Die zweite Lageraufnahmevertiefung 322 wird zur Aufnahme eines weiteren Lagers 33 verwendet und weist ebenfalls einen konvexen Ring zu einer Seite des Lagers 33 auf. Das Lager 33 ist grundsätzlich bekannt, weshalb es vorliegend nicht erneut beschrieben wird. Eine Seite des Lagers 33 berührt die konvexen Ringe der ersten und zweiten Lageraufnahmevertiefungen 312, 322, und die andere Seite ist mit einem Sicherungsring befestigt, um die Befestigung des Lagers 33 zu erzielen. Der Innendurchmesser des Sicherungsrings entspricht dem Innendurchmesser des Lagers 33. Die nach innen weisende Seite des Lagers 33, das in der zweiten Lageraufnahmevertiefung 322 angeordnet ist, ist an der Hülsenstufe der rechten Abdeckhülse 23 befestigt. Da die Hülsenstufe der rechten Abdeckhülse 23 mit einer Verdrahtungsnut versehen ist, ist der Draht, der zur Abgabe des von der Wicklung 21 erzeugten Stroms dient, in dieser Verdrahtungsnut aufgenommen.

Die zylindrische Permanentmagnetanordnung 40 umfasst einen Montagezylinder 41, der an der Innenseitenwand der Hülse 31 befestigt ist, und einen Permanentmagneten 42, der in dem Montagezylinder 41 angeordnet ist. Der Montagezylinder 41 ist zwischen der Übergangskante 313 und dem Abdeckzylinder 321 geklemmt gehalten, so dass er mit der Gehäuseanordnung 30 dreht. Der Permanentmagnet 42 kann in mehrere Abschnitte unterteilt sein, die jeweils an der Innenseitenwand des Montagezylinders 41 befestigt sind und gemeinsam mit dem Montagezylinder 41 drehen. Der Permanentmagnet 42 kann an der Innenseite des Montagezylinders 41 klebend fixiert sein.

Die Stromabgabeanordnung 50 umfasst eine Anschlaghülse 51, die auf der Achse 10 befestigt ist, und eine elektrische Steckeranordnung 52, die fest an der Anschlaghülse 51 angeordnet ist. Die Anschlaghülse 51 ist auf der Achse 10 befestigt, und ein Ende der Anschlaghülse 51 stößt gegen den Innenring des Lagers 33 und ist an dem Innenring des Lagers 33 befestigt.

Ferner sind zwei Sätze von Muttern 11 auf der Achse 10 vorgesehen. Einer der beiden Muttersätze 11 ist auf ein Ende der Achse 10 geschraubt und stößt gegen die Stromausgabeanordnung 50, und der andere Satz drückt direkt gegen das Lager 33. Um eine festere Anlage zu erzielen, kann zumindest eine Unterlegscheibe zwischen den Muttersätzen 11 und dem Lager 33 vorgesehen sein. Die zwei Muttersätze 11 können die verschiedenen Komponenten zusammendrücken, so dass diese sich gegenseitig in ihrer Position fixieren.

Im Gegensatz zum Stand der Technik nimmt der Fahrradnabengenerator der vorliegenden Erfindung die Struktur der Gehäuseanordnung 30, der Spulenwicklungsanordnung 20 und der Permanentmagnetanordnung 40 an. Insbesondere umfasst die Gehäuseanordnung 30 eine Hülse 31 und die Abdeckzylinderanordnung 32 sowie zwei Lager 33. Die beiden Lager 33 sind in der Hülse 31 und in der Abdeckzylinderanordnung 33 aufgenommen. Die Hülse 31 ist mit einem Flansch 311 versehen, an dem die Speichen montiert werden können. Der Flansch 311 und die Lager 33 sind auf der gleichen radialen Ebene positioniert, wodurch die axiale Länge der Gehäuseanordnung 30 reduziert werden kann. Da die Lager 33 nur in einer Richtung positioniert werden müssen, wird zudem die Montage erleichtert. Ferner ist der Abdeckzylinder 321 mit der Hülse 31 verschraubt, wodurch die Anzahl zu montierender Elemente reduziert wird. Die beiden Seiten der Spulenwicklungsanordnung 20 sind über die linke und rechte Abdeckhülse 22, 23 fixiert, wodurch auch die Schwierigkeit des Befestigens reduziert wird. Gleichzeitig werden die rechte Abdeckhülse 23 und das entsprechende Lager 33 zusammengepresst, was nicht nur der Fixierung der Position des Lagers 33 dienlich ist, wodurch die Stabilität der Struktur verbessert wird, sondern auch zu einer Reduzierung des Volumens und einer kompakteren Struktur führt, da keine weiteren Montageelemente erforderlich sind.

Im Ergebnis kann der durch die vorliegende Erfindung geschaffene Fahrradnabengenerator nicht nur eine kompakte Struktur erzielen, wodurch die Stabilität verbessert wird, sondern auch die axiale Länge reduzieren, was der Gestaltungsfreiheit bezüglich des Fahrraddesigns dienlich ist.

Die zuvor beschriebene Ausführungsform der vorliegenden Erfindung dient nur als Beispiel und soll den Schutzbereich der vorliegenden Erfindung nicht einschränken. Entsprechend sind Modifikationen, Änderungen oder Verbesserungen möglich, ohne den durch die beiliegenden Ansprüche definierten Schutzbereich zu verlassen.

### Bezugszeichenliste

- 1: Nabengenerator
- 10: Achse
- 11: Mutter
- 12: Unterlegscheibe
- 20: Spulenwicklungsanordnung
- 21: Wicklung
- 22: linke Abdeckhülse
- 23: rechte Abdeckhülse
- 24: Klemmscheibe
- 31: Hülse
- 32: Abdeckzylinderanordnung
- 33: Lager
- 40: Permanentmagnetanordnung
- 41: Montagezylinder
- 42: Permanentmagne
- 50: Stromausgabeanordnung
- 51: Anschlaghülse
- 52: Steckeranordnung
- 123: Abdeckzylinder
- 241: Punkte
- 311: Flansch
- 312: Lageraufnahmevertiefung
- 313: Übergangskante
- 321: Abdeckzylinder
- 322: Lageraufnahmevertiefung

## Patentansprüche

1. Nabengenerator (1) für Fahrräder, umfassend eine Achse (10), eine Spulenwicklungsanordnung (20), die auf der Achse (10) befestigt ist, eine Gehäuseanordnung, die auf die Spulenwicklungsanordnung (20) aufgeschoben ist, und eine zylindrische Permanentmagnetanordnung (40), die fest an der Gehäuseanordnung angeordnet und zwischen der Gehäuseanordnung und der Spulenwicklungsanordnung (20) gehalten ist, wobei die Spulenwicklungsanordnung (20) eine auf die Achse (10) geschobene Wicklung (21), eine linke Abdeckhülse (22) und eine rechte Abdeckhülse (23), die an beiden Seiten der Wicklung (21) fixiert sind, und eine Klemmscheibe (24) aufweist, die an der linken Abdeckhülse (22) angeordnet ist, wobei auf der Klemmscheibe (24) eine Mehrzahl von vorstehenden Punkten (241) vorgesehen ist, die in die Wicklung (21) gedrückt sind, wobei die Gehäuseanordnung eine Hülse (31), eine Abdeckzylinderanordnung (32), die an einem Ende der Hülse (31) angeordnet ist, und zwei Lager (33) aufweist, die an der Hülse (21) und der Abdeckzylinderanordnung (32) angeordnet sind, wobei die Abdeckzylinderanordnung (32) über ein Gewinde mit der Hülse (31) verschraubt ist, und wobei die zylindrische Permanentmagnetanordnung (40) einen Montagezylinder (41), der an der Innenseitenwand der Hülse (21) befestigt ist, und einen Permanentmagneten (42) aufweist, der in dem Montagezylinder (41) angeordnet ist, wobei der Permanentmagnet (42), wenn die Hülse (31) dreht, drehend um die Wicklung (21) angetrieben wird, um elektrischen Strom zu erzeugen.

2. Fahrradnabengenerator (1) nach Anspruch 1, wobei zwei Flansche (311) an den axialen Enden der Hülse (31) angeordnet sind, die sich entlang der radialen Richtung der Achse (10) erstrecken.

3. Fahrradnabengenerator (1) nach Anspruch 2, wobei eine Seite der Hülse (31) mit einer ersten Lageraufnahmevertiefung (312) versehen ist, wobei eines der beiden Lager (33) in der ersten Lageraufnahmevertiefung (312) aufgenommen ist, und wobei einer der beiden Flansche (311) außerhalb der ersten Lageraufnahmevertiefung (312) angeordnet ist.

4. Fahrradnabengenerator (1) nach Anspruch 1, wobei zwischen der Hülse (31) und der ersten Lageraufnahmevertiefung (312) eine Übergangskante (313) vorgesehen ist.

5. Fahrradnabengenerator (1) nach Anspruch 1, wobei die Abdeckzylinderanordnung (32) einen Abdeckzylinder (321) aufweist, wobei eine zweite Lageraufnahmevertiefung (322) an einer Seite des Abdeckzylinders (321) vorgesehen ist, und wobei eines der Lager (33) in der zweiten Lageraufnahmevertiefung (322) aufgenommen ist.

6. Fahrradnabengenerator (1) nach Anspruch 5, wobei die rechte Abdeckhülse (23) eine gestufte Abdeckhülse mit einer Hülsenstufe ist, an der dasjenige Lager (33) angeordnet ist, das in der zweiten Lageraufnahmevertiefung (322) aufgenommen ist.

7. Fahrradnabengenerator (1) nach Anspruch 5, wobei die zweite Lageraufnahmevertiefung (322) mit einem Sicherungsring zum Festklemmen des Lagers (33) versehen ist, und wobei der Innendurchmesser des Sicherungsrings dem Innendurchmesser des Lagers (33) entspricht.

8. Fahrradnabengenerator (1) nach Anspruch 1, der ferner eine auf die Achse (10) aufgeschobene Stromausgabeanordnung (50), die eine an der Achse (10) befestigte Anschlaghülse (51) umfasst und eine elektrische Steckeranordnung (52) aufweist, die an der Anschlaghülse (51) befestigt ist.

9. Fahrradnabengenerator (1) nach Anspruch 8, wobei ein Ende der Anschlaghülse (51) gegen den Innenring des Lagers (33) drückt und an dem Innenring des Lagers (33) fixiert ist.

10. Fahrradnabengenerator (1) nach Anspruch 8, wobei zumindest zwei Muttern auf der Achse (10) angeordnet sind, wobei die zwei Muttern dazu verwendet werden, die Relativposition der beiden Lager (33) zu fixieren.
